# EUROPÄISCHE PATENTSCHRIFT

(11) **EP 1 310 419 B1**
(45) Veröffentlichungstag und Bekanntmachung des Hinweises auf die Patenterteilung: **29.08.2007**
(21) Anmeldenummer: 02023840.8
(22) Anmeldetag: 24.10.2002
(51) Int. Cl.: B62D 5/04, B62D 15/02, B66F 9/06

(54) **Verfahren und Vorrichtung zur Ausrichtung eines Lenkwinkelgebers für eine elektrische Lenkung eines Flurförderzeuges**
Method and device for calibrating a steering input device of an electric power steering of an industrial truck
Procédé et appareil pour calibrer un organe de commande d'une direction assistée électrique d'un chariot de manutention

(30) Priorität: 12.11.2001 DE 10155441
(43) Veröffentlichungstag der Anmeldung: 14.05.2003
(73) Patentinhaber: Jungheinrich Aktiengesellschaft, 22047 Hamburg (DE)
(72) Erfinder: Allerding, Uwe, 21409 Ehbsen (DE); Langlotz, Martin, 25365 Sparrieshoop (DE); Kramer, Dieter, 24558 Ulzburg (DE); Claussen, Hans-Peter, 25476 Bad Bramstedt (DE)
(74) Vertreter: Hauck Patent- und Rechtsanwälte

(56) Entgegenhaltungen:
- EP-A- 0 872 405
- EP-A- 1 308 367
- WO-A-00/64726
- DE-A1- 10 242 653
- DE-A1- 19 625 350
- GB-A- 2 361 899
- US-A- 5 097 917
- US-A1- 2001 042 655
- PATENT ABSTRACTS OF JAPAN Bd. 1998, Nr. 14, 31. Dezember 1998 (1998-12-31) & JP 10 236329 A (KOYO SEIKO CO LTD; TOYOTA MOTOR CORP), 8. September 1998 (1998-09-08)

## Beschreibung

Die Erfindung betrifft ein Verfahren und eine Vorrichtung zur Ausrichtung eines Lenkwinkelgebers für eine elektrische Lenkung eines Flurförderzeugs.

Bei elektrischen Lenkungen fehlt eine mechanische Verbindung vom Lenkwinkelgeber und dem zu lenkenden Rad. Eine Bewegung des Lenkwinkelgebers wird hierbei erfaßt und in elektrische Signale umgewandelt, die durch eine Lenksteuerung in Steuersignale für Stellmotoren der zu lenkenden Räder umgesetzt werden.

Aus DE 195 10 717 ist bekannt, ein Lenkrad mit einem oder mehreren inkrementalen Gebern auszuführen. Die beispielsweise als Sensorlager ausgeführten Geber erzeugen dabei Signale, die eine Relativbewegung des Lenkrades erfassen. Die Stellung des Lenkrades bei der Geradeausfahrt ist daher bei dieser elektrischen Lenkung beliebig.

Aus DE 196 25 350 A1 ist eine Lenkvorrichtung für ein Flurförderzeug bekannt, die einen Sollwertsensor am Lenkwinkelgeber zur Bildung eines Sollwertes für das gelenkte Rad und einen Istwertsensor zur Erfassung der Stellung des gelenkten Rads aufweist. Ein Regler bestimmt hieraus Stellsignale für einen Stellmotor. Ferner ist bekannt, für eine Geradeausfahrt des Fahrzeugs das gelenkte Rad per Knopfdruck in eine Geradeausstellung zu stellen.

Der Erfindung liegt die Aufgabe zugrunde, eine Vorrichtung und ein Verfahren bereitzustellen, die mit einfachen Mitteln die Ausrichtung eines Lenkwinkelgebers im Hinblick auf eine Referenzstellung gestatten.

Die Aufgabe wird durch ein Verfahren mit den Merkmalen aus Anspruch 1 gelöst.

Bei dem erfindungsgemäßen Verfahren erfolgt in der Ausrichtphase eine Ansteuerung der Räder gemäß einem ersten Übersetzungsverhältnis. Die Lenksteuerung schaltet in die Betriebsphase, indem eine Ansteuerung der Räder gemäß einem zweiten Übersetzungsverhältnis erfolgt, nachdem die Lenksteuerung festgestellt hat, daß bei dem zweiten Übersetzungsverhältnis der Lenkwinkelgeber in der Referenzstellung zu der vorbestimmten Stellung der Räder führt. Bei dem erfindungsgemäßen Verfahren erfolgt also bereits in der Ausrichtphase eine Ansteuerung der zu lenkenden Räder. Hierbei wird ein Übersetzungsverhältnis gewählt, das sich von dem der Betriebsphase unterscheidet. Während der Ausrichtphase werden durch die Sensoreinrichtungen die Ist-Stellungen der Räder und des Lenkwinkelgebers erfaßt. Die erfaßten Ist-Stellungen werden unter Annahme des Übersetzungsverhältnisses aus der Betriebsphase dahingehend miteinander verglichen, ob der Lenkwinkelgeber in seiner Referenzstellung die vorbestimmte Stellung der Räder herbeiführt.

In einer möglichen Weiterbildung des Verfahrens kann in der Ausrichtphase das erste Übersetzungsverhältnis schrittweise oder kontinuierlich geändert werden, bis die Betriebsphase erreicht ist. Bei dieser Weiterbildung werden durch die Lenksteuerung zusätzlich zu dem ersten Übersetzungsverhältnis weitere Übersetzungsverhältnisse vorgegeben. Die Übersetzungsverhältnisse in der Ausrichtphase nähern sich dabei schrittweise oder kontinuierlich dem Übersetzungsverhältnis in der Betriebsphase an.
Hierdurch kann ein sprunghafter Übergang zu dem Übersetzungsverhältnis der Betriebsphase abgeschwächt oder abgemindert werden.

Die erfindungsgemäße Aufgabe wird ebenfalls durch eine Vorrichtung mit den Merkmalen aus Anspruch 4 gelöst.

Die Vorrichtung besitzt eine Lenksteuerung, die mindestens zwei unterschiedliche Übersetzungsverhältnisse zwischen Lenkwinkelgeber und den zu lenkenden Rädern besitzt. In einer Ausrichtphase gibt die Lenksteuerung ein erstes Übersetzungsverhältnis vor, während in der Betriebsphase die Lenkung mit einem zweiten Übersetzungsverhältnis erfolgt. Die Lenksteuerung wechselt in die Betriebsphase, wenn die erfaßten Ist-Stellungen des Lenkwinkelgebers und der Räder eine Stellung einnehmen, in der für das zweite Übersetzungsverhältnis die Referenzstellung des Lenkwinkelgebers einer vorbestimmten Stellung der Räder entspricht. Durch die Lenksteuerung ist also bereits während der Ausrichtphase der Einsatz des Flurförderzeugs und dessen Lenkung möglich.

In einer möglichen Weiterbildung der Lenksteuerung stellt diese während der Ausrichtphase kontinuierlich oder schrittweise Übersetzungsverhältnisse ein, die sich dem zweiten Übersetzungsverhältnis in der Betriebsphase annähern.

Alternativ ist auch eine Ausgestaltung der Lenksteuerung möglich, die zu Beginn der Ausrichtphase die Abweichung des Lenkwinkelgebers von der Referenzstellung für das zweite Übersetzungsverhältnis bestimmt und das erste Übersetzungsverhältnis derart wählt, daß die Lenksteuerung nach einer vorbestimmten Bewegungsstrecke des Lenkwinkelgebers in die Betriebsphase wechselt.

Anders als bei der Erfindung ist ebenfalls eine Lenksteuerung möglich, die in einer Ausrichtphase einer Ansteuerung der Räderbewegung unabhängig von einer Bewegung des Lenkwinkelgebers vornimmt und die erfaßten Ist-Stellungen von Lenkwinkelgeber und Rädern dahin vergleicht, ob der Lenkwinkelgeber in seiner Referenzstellung zu der vorbestimmten Stellung der Räder führt. Nachfolgend wird in die Betriebsphase umgeschaltet, in der eine Ansteuerung der Radbewegung aufgrund der Betätigung des Lenkwinkelgebers mit einem vorbestimmten Übersetzungsverhältnis erfolgt.

In einer bevorzugten Ausgestaltung ist als Lenkwinkelgeber ein Lenkrad vorgesehen, das vorzugsweise mit einem Knauf versehen ist.

Zusätzlich kann eine Einrichtung zur Befestigung der Referenzstellung des Knaufs für eine vorbestimmte Stellung der Räder vorgesehen sein. Hierbei erfolgt die Ausrichtung des Knaufs beispielsweise für die Geradeausfahrt des Flurförderzeugs.

In einer zweckmäßigen Ausgestaltung der erfindungsgemäßen Vorrichtung sind erste und/oder zweite Sensoreinrichtung mit einem inkrementalen Geber und einem feststehenden Detektor versehen, der für eine oder mehrere Positionen die absolute Stellung der Räder bzw. des Lenkwinkelgebers erfaßt.

Bevorzugt leitet die Lenksteuerung die Ansteuerphase mit jedem Starten des Flurförderzeugs ein.

Eine bevorzugte Ausgestaltung der erfindungsgemäßen Vorrichtung wird nachfolgend mit Bezug auf die Figuren näher beschrieben. Es zeigt:
Fig. 1 eine schematische Darstellung einer beispielhaften Lenksteuerung,
Fig. 2 ein Flußdiagramm für ein Ansteuerverfahren,
Fig. 3 ein Flußdiagramm zu einem erfindungsgemäßen Ansteuerverfahren und
Fig. 4 ein Flußdiagramm für ein weiteres Ansteuerverfahren.

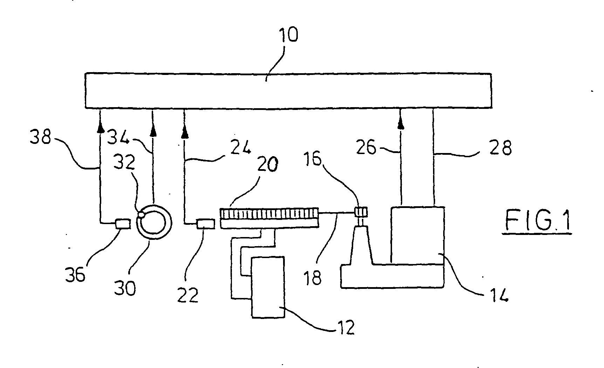

Figur 1 zeigt eine elektrische Lenksteuerung 10 zur Steuerung eines Rades 12 bei einem Flurförderzeug. In Figur 1 ist lediglich ein Rad dargestellt, jedoch können mit der erfindungsgemäßen Lenksteuerung auch mehrere lenkbare Räder angesteuert werden.

Das Rad 12 ist an einem Drehschemel 20 gelagert, der drehbar an einem nicht dargestellten Flurförderzeug gelagert ist. Ein Einstellen des Rades 12 erfolgt durch einen Motor 14, der über ein Ritzel 16 und eine Kette 18 den Drehschemel 20 dreht. Alternativ zu der dargestellten Kraftübertragung kann eine Kraftübertragung auf den Drehschemel auch direkt über ein geeignetes Getriebe und ein Ritzel erfolgen.

In dem dargestellten Ausführungsbeispiels erfaßt ein Sensor 22 eine oder mehrere Stellungen des Rades 12. Signale des Sensors 22 liegen über die Leitung 24 an der Lenksteuerung 10.

Der Lenkmotor 14 ist mit einem Sensorlager (nicht dargestellt) versehen, das über die Leitung 26 Signale zu den Umdrehungen des Lenkmotors 14 an die Lenksteuerung 10 leitet. Über die Leitung 28 wird der Lenkmotor 14 mit Strom versorgt.

Ein Lenkrad 30 mit einem Knauf 32, eines nicht gezeigten Flurförderzeugs, leitet seine Signale über die Leitung 34 an die Lenksteuerung 10. Das Lenkrad 30 ist ebenfalls in einem Sensorlager (nicht dargestellt) gelagert, so daß, wie bereits bei dem Lenkmotor 14, über die Leitung 34 an der Lenksteuerung 10 anliegende Signale, die inkrementelle Bewegung des Lenkrades 30 angeben.

Ein Sensor 36 erfaßt eine oder mehrere Stellungen des Lenkrades 32 und leitet die Signale über die Leitung 38 an die Lenksteuerung 10 weiter. Gemeinsam mit den Signalen des Sensorlagers und dem Sensor 36 bestimmt die Lenksteuerung 10 die Ist-Stellung des Lenkrades 30.

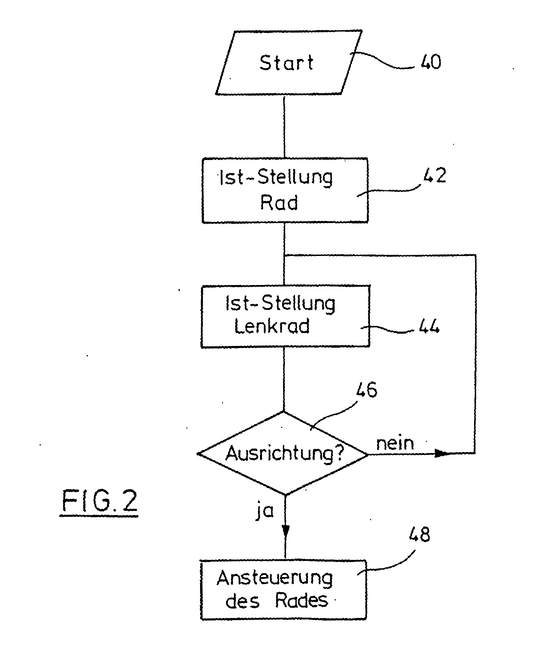

Figur 2 zeigt ein Flußdiagramm zu einem Ausrichtverfahren. Mit Schritt 40 beginnt die Ausrichtphase für das zu lenkende Rad. Die Ausrichtphase wird eingeleitet, wenn das Flurförderzeug neu gestartet wird. In einem ersten Schritt 42 wird die Ist-Stellung des zu lenkenden Rades festgestellt. Hierzu wird je nach Ausgestaltung des Sensors auch das Rad bewegt, bis die Ist-Stellung des Rades erfaßt wurde. In einem unabhängig davon durchgeführten Schritt 44 wird die Ist-Stellung des Lenkrades erfaßt. Hier wird je nach gewähltem Sensor die Ist-Stellung erfaßt, indem durch einen Benutzer das Lenkrad gedreht wird. In einem nachfolgenden Schritt 46 wird verglichen, ob die Ist-Stellung des Lenkrades und die Ist-Stellung des Rades der Referenzposition des Lenkrades entsprechen. Für diesen Vergleich wird das Übersetzungsverhältnis in der Betriebsphase berücksichtigt; es wird also verglichen, ob ausgehend von der in 44 erfaßten Ist-Stellungen bei dem Übersetzungsverhältnis in dem Betriebsmodus sich die Radstellung so einstellt, daß in der Referenzposition des Lenkrades eine vorbestimmte Radstellung eingenommen wird.

Ergibt der Vergleich, daß das Lenkrad noch nicht die richtige Stellung eingenommen hat, so wird nach einer Bewegung des Lenkrad erneut dessen Ist-Stellung abgefragt und ein erneuert Vergleich 46 ausgeführt.

Ergibt der Vergleich, daß das Lenkrad die richtige Stellung eingenommen hat, so erfolgt in dem nachfolgenden Schritt 48 ein Wechsel in die Betriebsphase und eine Ansteuerung des Rades.

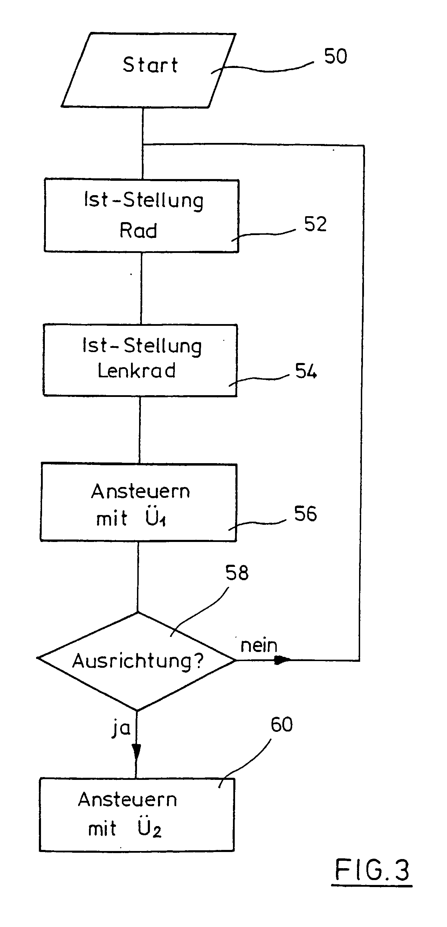

Figur 3 zeigt ein zweites Verfahren zur Ausrichtung des Lenkrades, der erfindungsgemäß ist. Das Verfahren beginnt mit Schritt 50, der beispielsweise mit dem Starten des Flurförderzeuges eingeleitet wird. In den nachfolgenden Schritten 52 und 54 wird die Ist-Stellung von Rad und Lenkrad erfaßt. Mit den eingelesenen Werten aus den Schritten 52 und 54 erfolgt ein Ansteuern des Rades mit einem ersten Übersetzungsverhältnis Ü₁ in Schritt 56. Hieran anschließend wird in Schritt 58 die Ausrichtung des Lenkrades dahingehend überprüft, ob das Lenkrad bei einer Ansteuerung des Rades mit einem Übersetzungsverhältnis Ü₂ die Referenzstellung einnimmt. Die Reihenfolge der Schritte 52 bis 58 kann hierbei ausgetauscht werden. Ergibt die Überprüfung in Schritt 58, daß das Lenkrad ausgerichtet ist, so erfolgt nachfolgend in Schritt 60 eine Ansteuerung der Räder mit dem Übersetzungsverhältnis Ü₂. Ergibt die Abfrage den Schritt 58, daß das Lenkrad noch nicht ausgerichtet ist, so kehrt das Verfahren zu dem Schritt 52 zurück.

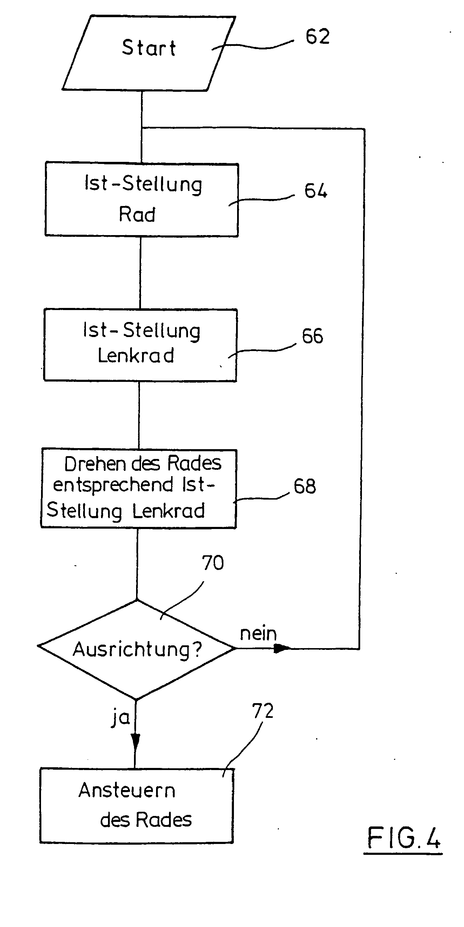

Fig. 4 zeigt ein weiteres Ausrichtverfahren für das Lenkrad. Das Verfahren beginnt mit Schritt 62, durch den die Einstellphase eingeleitet wird. In einem nachfolgenden Schritt 64 wird die Ist-Stellung der Räder erfaßt. In dem Schritt 66 wird anschließend die Ist-Stellung des Lenkrades aufgenommen. Hierbei kann einerseits eine Bewegung des Lenkrades gesperrt sein, bis die Einstellung der Räder abgeschlossen ist. Alternativ ist es ebenfalls möglich, daß eine Bewegung des Lenkrades während der Einstellphase berücksichtigt wird, bis eine Ausrichtung abgeschlossen ist. In einem Vergleichsschritt 70 wird anschließen verglichen, ob bereits eine korrekte Ausrichtung der Räder für die momentane Ist-Stellung des Lenkrades vorliegt. Ist die Ausrichtung noch nicht erreicht, so wird die Ausrichtphase beginnend mit Schritt 64 wiederholt. Ist die Ausrichtung abgeschlossen, so erfolgt in der anschließenden Betriebsphase eine Ansteuerung des Rades in Schritt 72.

## Patentansprüche

1. Verfahren zur Ausrichtung eines Lenkwinkelgebers für eine elektrische Lenkung eines Flurförderzeugs, bei dem der Lenkwinkelgeber eine Referenzstellung aufweist, die einer vorbestimmten Stellung eines oder mehrerer zu lenkenden Räder zugeordnet ist, und bei dem eine erste Sensoreinrichtung (36, 34) zur Erfassung der Ist-Stellung des Lenkwinkelgebers (30) und eine zweite Sensoreinrichtung (22, 26) zur Erfassung der Ist-Stellung der Räder (12) vorgesehen ist, mit den folgenden Verfahrensschritten:
• eine Lenksteuerung steuert in einer Ausrichtphase unter Bewegung des Lenkwinkelgebers die Räder gemäß einem ersten Übersetzungsverhältnis an,
• wenn die Lenksteuerung festgestellt hat, daß bei einem zweiten Übersetzungsverhältnis der Lenkwinkelgeber in seiner Referenzstellung zu der vorbestimmten Stellung der Räder führt, schaltet die Lenksteuerung in eine Betriebsphase um, in der eine Ansteuerung der Räder gemäß dem zweiten Übersetzungsverhältnis erfolgt.

2. Verfahren nach Anspruch 1, **dadurch gekennzeichnet, daß** die Lenksteuerung in der Ausrichtphase das erste Übersetzungsverhältnis schrittweise oder kontinuierlich dem Übersetzungsverhältnis in der Betriebsphase annähert.

3. Verfahren nach Anspruch 1, **dadurch gekennzeichnet, daß** die Lenksteuerung zu Beginn der Ausrichtphase die Abweichung des Lenkwinkelgebers von der Referenzstellung für das zweite Übersetzungsverhältnis bestimmt und das erste Übersetzungsverhältnis auswählt, derart, daß nach einer vorbestimmten Bewegungsstrecke des Lenkwinkelgebers die Lenksteuerung in die Betriebsphase wechselt.

4. Vorrichtung zur Ausrichtung eines Lenkwinkelgebers für eine elektrische Lenkung für ein Flurförderzeug, bei dem der Lenkwinkelgeber eine Referenzstellung aufweist, die einer vorbestimmten Stellung eines oder mehrerer zu lenkenden Räder zugeordnet ist, mit
• einer ersten Sensoreinrichtung, die die Ist-Stellung der zu lenkenden Räder erfaßt,
• einer zweiten Sensoreinrichtung, die die Ist-Stellung des Lenkwinkelgebers erfaßt, und einer Lenksteuerung, die mindestens zwei unterschiedliche Übersetzungsverhältnisse zwischen Lenkwinkelgeber und zu lenkenden Rädern besitzt, in einer Ausrichtphase ein erstes Übersetzungsverhältnis und in einer Betriebsphase ein zweites Übersetzungsverhältnis vorgibt und von der Ausrichtphase in die Betriebsphase wechselt, wenn die erfaßten Ist-Stellungen des Lenkwinkelgebers und der Räder eine Stellung einnehmen, in der für das zweite Übersetzungsverhältnis die Referenzstellung des Lenkwinkelgebers zu der vorbestimmten Stellung der Räder fuhrt.

5. Vorrichtung nach Anspruch 4, **dadurch gekennzeichnet, daß** die Lenksteuerung in der Ausrichtphase schrittweise oder kontinuierlich Übersetzungsverhältnisse einstellt, die sich dem Übersetzungsverhältnis der Betriebsphase annähern.

6. Vorrichtung nach Anspruch 5, **dadurch gekennzeichnet, daß** die Lenksteuerung zu Beginn der Ausrichtphase die Abweichung eines Lenkwinkelgebers von der Referenzstellung für das zweite Übersetzungsverhältnis bestimmt und das erste Übersetzungsverhältnis derart auswählt, daß die Lenksteuerung nach einer vorbestimmten Bewegungsstrecke des Lenkwinkelgebers in die Betriebsphase wechselt.

## Claims

1. Method for the calibration of a steering input device for an electric power steering of an industrial truck, in which the steering input device has a reference position, which is assigned to a predetermined position of one or more wheels to be steered, and in which a first sensor device (36, 34) for capturing the current position of the steering input device (30) and a second sensor device (22, 26) for capturing the current position of the wheels (12) are provided, with the following procedural steps:
• a steering control system drives the wheels in a calibration phase under movement of a steering control system in accordance with a first transmission ratio,
• if the steering control system determines that, in the case of a second transmission ratio, the steering input device in its reference position leads to the predetermined position of the wheels, the steering control system switches to an operating phase, in which the wheels are driven in accordance with the second transmission ratio.

2. Method according to claim 1, **characterized in that** the steering control system in the calibration phase brings the first transmission ratio closer to the transmission ratio in the operating phase stepwise or continuously.

3. Method according to claim 1, **characterized in that** the steering control system determines the deviation of the steering input device from the reference position for the second transmission ratio at the beginning of the calibration phase and selects the first transmission ratio such that after a predetermined movement path of the steering input device the steering control system switches to the operating phase.

4. Device for the calibration of a steering input device for an electric power steering for an industrial truck, in which the steering input device has a reference position, which is assigned to a predetermined position of one or more wheels to be steered, with
• a first sensor device, which captures the current position of the wheels to be steered,
• a second sensor device, which captures the current position of the steering input device, and a steering control system, which has at least two different transmission ratios between the steering input device and the wheels to be steered, provides in a calibration phase a first transmission ratio and in an operating phase a second transmission ratio and switches from the calibration phase to the operating phase when the captured current positions of the steering input device and the wheels assume a position in which, for the second transmission ratio, the reference position of the steering input device leads to the predetermined position of the wheels.

5. Device according to claim 4, **characterized in that** the steering control system in the calibration phase sets stepwise or continuously transmission ratios, which approach the transmission ratio of the operating phase.

6. Device according to claim 5, **characterized in that** the steering control system at the beginning of the calibration phase determines the deviation of a steering input device from the reference position for the second transmission ratio and selects the first transmission ratio such that the steering control system switches to the operating phase after a predetermined movement path of the steering input device.

## Revendications

1. Procédé pour calibrer un organe de commande d'une direction assistée électrique d'un chariot de manutention, dans lequel l'organe de commande présente une position de référence qui est associée à une position prédéterminée d'une ou de plusieurs roues à diriger, et dans lequel un premier dispositif capteur (36, 34) est prévu pour la détection de la position réelle de l'organe de commande (30) et un second dispositif capteur (22, 26) est prévu pour la détection de la position réelle des roues (12), avec les étapes opératoires suivantes :
• une commande de direction commande les roues selon un premier rapport de transmission dans une phase de calibrage en déplaçant l'organe de commande,
• lorsque la commande de direction a constaté que l'organe de commande conduit dans sa position de référence à la position prédéterminée des roues dans un second rapport de transmission, la commande de direction passe à une phase de fonctionnement dans laquelle une commande des roues selon le second rapport de transmission est effectuée.

2. Procédé selon la revendication 1, **caractérisé en ce que** la commande de direction approche dans la phase de calibrage le premier rapport de transmission progressivement ou en continu du rapport de transmission dans la phase de fonctionnement.

3. Procédé selon la revendication 1, **caractérisé en ce que** la commande de direction détermine au début de la phase de calibrage l'écart de l'organe de commande de la position de référence pour le second rapport de transmission et sélectionne le premier rapport de transmission de telle sorte qu'après une distance de déplacement prédéterminée de l'organe de commande, la commande de direction passe à la phase de fonctionnement.

4. Appareil pour calibrer un organe de commande d'une direction assistée électrique pour un chariot de manutention, dans lequel l'organe de commande présente une position de référence qui est associée à une position prédéterminée d'une ou de plusieurs roues à diriger, avec
• un premier dispositif capteur qui détecte la position réelle des roues à diriger,
• un second dispositif capteur qui détecte la position réelle de l'organe de commande, et une commande de direction qui possède au moins deux rapports de transmission différents entre l'organe de commande et les roues à diriger, prédéfinit un premier rapport de transmission dans une phase de calibrage et un second rapport de transmission dans une phase de fonctionnement et passe de la phase de calibrage à la phase de fonctionnement lorsque les positions réelles détectées de l'organe de commande et des roues adoptent une position dans laquelle la position de référence de l'organe de commande conduit à la position prédéterminée des roues pour le second rapport de transmission.

5. Appareil selon la revendication 4, **caractérisé en ce que** la commande de direction règle dans la phase de calibrage des rapports de transmission progressivement ou en continu qui s'approchent du rapport de transmission de la phase de fonctionnement.

6. Appareil selon la revendication 5, **caractérisé en ce que** la commande de direction détermine au début de la phase de calibrage l'écart de l'organe de commande de la position de référence pour le second rapport de transmission et sélectionne le premier rapport de transmission de telle sorte qu'après une distance de déplacement prédéterminée de l'organe de commande, la commande de direction passe à la phase de fonctionnement.
